Europäisches Patentamt

European Patent Office

Office européen des brevets

(11) Veröffentlichungsnummer: **0 400 457**

**A1**

(12) **EUROPÄISCHE PATENTANMELDUNG**

(21) Anmeldenummer: **90109678.4**

(22) Anmeldetag: **22.05.90**

(51) Int. Cl.5: **B29C 49/04, B29C 65/02**

(30) Priorität: **30.05.89 DE 3917524**

(43) Veröffentlichungstag der Anmeldung:
**05.12.90 Patentblatt 90/49**

(84) Benannte Vertragsstaaten:
**AT BE CH DK ES FR GB GR IT LI LU NL SE**

(71) Anmelder: **Schütz-Werke GmbH & Co. KG.**
**Bahnhofstrasse 25**
**D-5418 Selters(DE)**

(72) Erfinder: **Schütz, Udo**
**Rückersteg 4**
**D-5418 Selters(DE)**

(74) Vertreter: **Pürckhauer, Rolf, Dipl.-Ing.**
**Friedrich-Ebert-Strasse 27 Postfach 10 09 28**
**D-5900 Siegen 1(DE)**

(54) **Herstellung von Fasskörpern.**

(57) Zur Herstellung von Faßkörpern (8a, 8b) wird ein geschlossener, zylindrischer Doppelkörper (8) aus einem extrudierten, schlauchförmigen Vorformling in der Blasform einer Blasformmaschine geblasen. Nach dem Entformen des abgekühlten Doppelkörpers (8) wird dieser durch Herausschneiden eines Mittelringes (9), der die Blasöffnung (10) eines Einschließblasdornes zum Hauptblasen des Doppelkörpers (8) enthält, in zwei Faßkörper (8a, 8b) geteilt.

Zur Herstellung von Spundfässern wird auf den oberen Rand der Faßkörper (8a, 8b) ein aus Kunststoff gespritzter Spunddeckel aufgeschweißt.

Zur Fertigung von Weithalsfässern mit abnehmbarem Deckel und Spannringverschluß wird auf den oberen Rand der Faßkörper (8a, 8b) ein als Kunststoffspritzteil hergestellter Adapterring mit einer Bordur zur Auflage des Deckelflansches aufgeschweißt.

Fig.3

# Herstellung von Fasskörpern

Die Erfindung betrifft das Herstellen von Faßkörpern, wobei auf den freien Rand eines Faßkörpers zum Herstellen von Spundfässern ein als Kunststoffspritzteil hergestellter Spunddeckel oder zum Herstellen von Weithalsfässern ein als Kunststoffspritzteil hergestellter Adapterring mit einer Bordur zur Auflage des Flansches eines abnehmbaren Deckels aufgeschweißt wird.

Bei dem zur Herstellung von Fässern vorwie-gend zum Einsatz gelangenden Extrusionsblasver-fahren wird in der ersten Verfahrensstufe ein schlauchförmiger Vorformling aus einem Schlauchkopf mit Hilfe eines Schmelzspeichers taktweise extrudiert, und in der zweiten Verfahrensstufe wird der Vorformling in einer zweiteiligen Blasform zu einem Faßkörper aufgeblasen, der durch den Kontakt mit den gekühlten, formgebenden Wänden der Blasform erstarrt.

Der Erfindung liegt die Aufgabe zugrunde, ein Verfahren auf der Basis des bekannten Extrusionsblasformverfahrens zur Herstellung von Fässern zu entwickeln, das bei gleichen Blasmaschinenkapazitäten höhere Produktionsleistungen erbringt und zur Fertigung sowohl von Weithals- als auch von Spundfässern eingesetzt werden kann.

Diese Aufgabe wird erfindungsgemäß durch die Verwendung des aus der US-PS 3 432 586 bekannten Verfahrens zum Herstellen von Behältern aus thermoplastischem Kunststoff gelöst, bei dem ein geschlossener zylindrischer Doppelkörper aus einem extrudierten schlauchförmigen Vorformling in einer Blasform geblasen, entformt und durch Herausschneiden eines Mittelringes, der die Blasöffnung eines Einschießblasdornes enthält, in zwei der Behälter geteilt wird.

Das erfindungsgemäße Verfahren ist nachstehend anhand einer in der Zeichnung schematisch dargestellten Blasformmaschine erläutert. Es zeigt

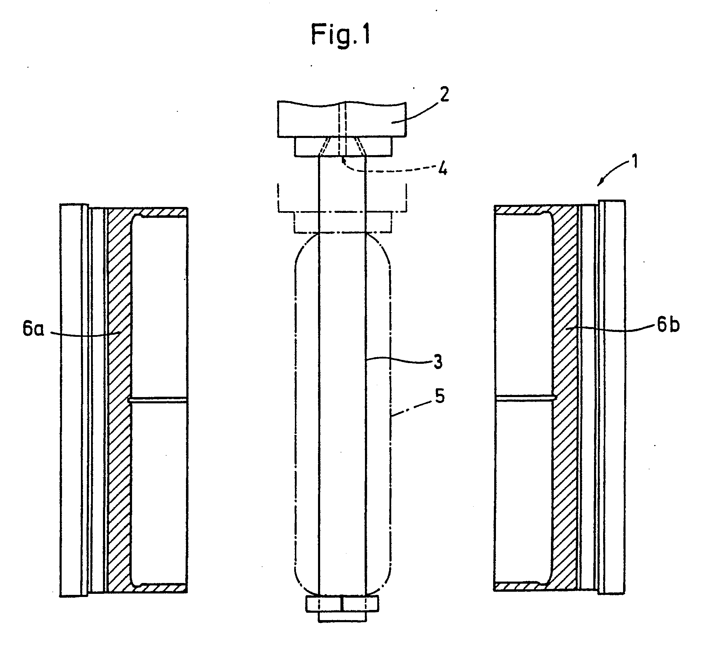

Fig. 1 die Blasformmaschine mit geöffneter Blasform beim Extrudieren und Vorblasens des Vorformlings,

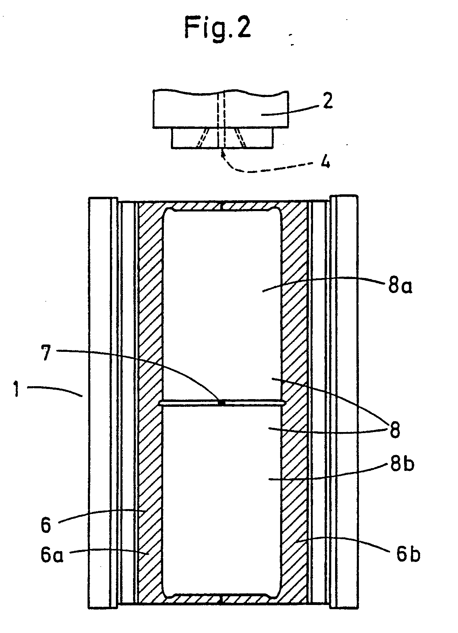

Fig. 2 die Blasformmaschine mit geschlossener Blasform beim Hauptblasen des Blaskörpers und

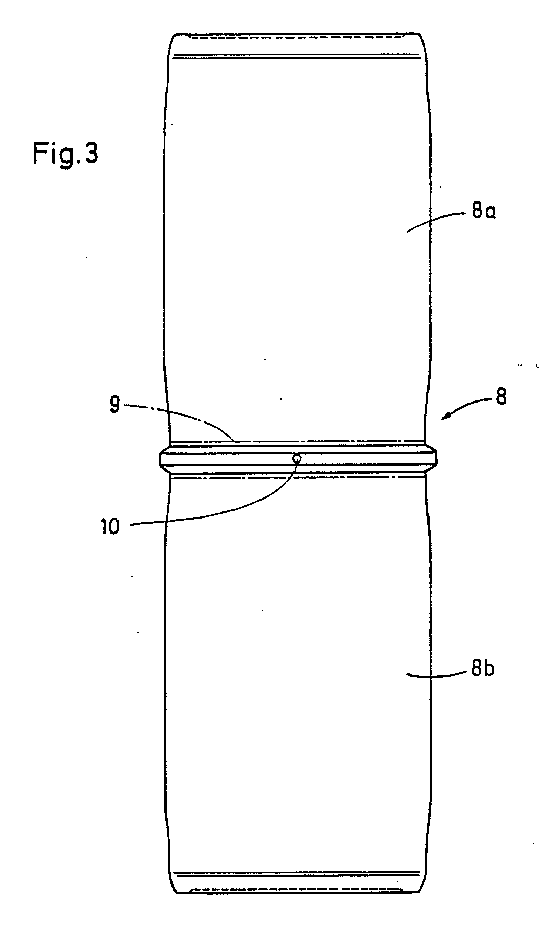

Fig. 3 den entformten Blaskörper.

Bei dem Extrusionsblasverfahren zur Herstellung von Fässern aus einem thermoplastischen Kunststoff wird in der ersten Verfahrensstufe durch den Schlauchkopf 2 einer Blasform-Maschine 1 taktweise ein Schlauch 3 extrudiert, der nach Schließen des unteren Endes mit einem Schließwerkzeug mittels über eine Düse 4 im Schlauchkopf 2 zugeführter Blasluft zu einem Vorformling 5 vorgeblasen wird.

Anschließend wird nach dem Zusammenquetschen des oberen Endes des Vorformlings 5 mittels einer Schließeinheit und dem Schließen der beiden Formhälften 6a, 6b der geteilten Blasform 6 in der zweiten Verfahrensstufe der Vorformling 5 mittels Blasluft, die über einen in den Mittelteil des schlauchartigen Vorformlings 5 eingeschossenen Blasdorn 7 zugeführt wird, zu einem Doppelfaßkörper 8 fertiggeblasen.

Nach dem Abkühlen des Blaskörpers wird die Blasform 6 geöffnet und der Doppelfaßkörper 8 der Blasform entnommen.

Schließlich wird der Doppelfaßkörper 8 durch Herausschneiden eines Mittelringes 9, der die Blasöffnung 10 des Einschießblasdornes 7 zum Hauptblasen des Doppelfaßkörpers 8 enthält, in zwei gleich große Faßkörper 8a, 8b geteilt.

Zur Herstellung von Spundfässern wird in nicht dargestellter Weise auf den oberen Rand der Faßkörper 8a, 8b ein aus Kunststoff gespritzter Spunddeckel aufgeschweißt.

Zur Fertigung von Weithalsfässern mit abnehmbarem Deckel und Spannringverschluß wird in nicht dargestellter Weise auf den oberen Rand der Faßkörper 8a, 8b ein als Kunststoffspritzteil hergestellter Adapterring mit einer Bordur zur Auflage des Deckelflansches aufgeschweißt.

## Ansprüche

Verwendung eines Verfahrens zum Herstellen von Behältern aus thermoplastischem Kunststoff, bei dem ein geschlossener zylindrischer Doppelkörper aus einem extrudierten schlauchförmigen Vorformling in einer Blasform geblasen, entformt und durch Herausschneiden eines Mittelringes, der die Blasöffnung eines Einschießblasdornes enthält, in zwei der Behälter geteilt wird,
für das Herstellen von Faßkörpern, wobei auf den freien Rand des Faßkörpers zum Herstellen von Spundfässern ein als Kunststoffspritzteil hergestellter Spunddeckel oder zum Herstellen von Weithalsfässern ein als Kunststoffspritzteil hergestellter Adapterring mit einer Bordur zur Auflage des Flansches eines abnehmbaren Deckels aufgeschweißt wird.

# Fig.1

# Fig.2

Fig.3

8a

9

8

10

8b

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| X | <u>DE - A1 - 3 410 303</u> (CITY INVESTING) * Ansprüche 2-4; Fig. 10,11 * | 1 | B 29 C 49/04 B 29 C 65/02 |
| Y | <u>GB - A - 2 071 006</u> (SUMITOMO BAKELITE) * Fig. 2d, 2c * | 1 | |
| Y | <u>GB - A - 1 258 929</u> (DART INDUSTRIES) * Ansprüche 1,2 * | 1 | |
| Y | <u>GB - A - 1 322 868</u> (TELEPHON- UND TELEGRAPHEN- FABRIKS-AKTIENGESELLSCHAFT KAPSCH & SÖHNE) * Anspruch 1 * | 1 | |
| D,Y | <u>US - A - 3 432 586</u> (STENGER) * Fig. 1,2 * | 1 | |

EINSCHLÄGIGE DOKUMENTE

RECHERCHIERTE SACHGEBIETE (Int. Cl.⁵)

B 29 C

Der vorliegende Recherchenbericht wurde für alle Patentansprüche erstellt.

| Recherchenort | Abschlußdatum der Recherche | Prüfer |
|---|---|---|
| WIEN | 11-09-1990 | REININGER |